(19) Europäisches Patentamt
European Patent Office
Office européen des brevets

(11) Publication number: 0 416 682 B1

# EUROPEAN PATENT SPECIFICATION

(45) Date of publication of patent specification: 21.12.94    (51) Int. Cl.5: **C08L 95/00**, C08K 5/09

(21) Application number: 90202230.0

(22) Date of filing: 17.08.90

(54) **Bitumen compositions.**

(30) Priority: 21.08.89 FR 8911067

(43) Date of publication of application:
13.03.91 Bulletin 91/11

(45) Publication of the grant of the patent:
21.12.94 Bulletin 94/51

(84) Designated Contracting States:
AT CH DE DK ES FR GB IT LI NL SE

(56) References cited:
AU-A- 557 974

JOURNAL OF THE AMERICAN OIL CHEMISTS'
SOCIETY, vol. 56, no. 2, November
1979,pages 782A-785A, Champaign, US; E.C.
LEONARD: "Polymerisation dimer acids"

(73) Proprietor: SHELL INTERNATIONALE RE-
SEARCH MAATSCHAPPIJ B.V.
Carel van Bylandtlaan 30
NL-2596 HR Den Haag (NL)

(72) Inventor: Gerritsen, Antonie Hermanus
Rue Gosselin
F-76500 La Londe (FR)
Inventor: Paroielle, Pascal
5 ter Ancienne Route de Duclair
F-76380 Canteleu (FR)
Inventor: Rabiot, Denis
34 La Cote Pelee,
Bosc Regnoult en Roumois
F-27520 Bourgtheroulde (FR)

**Description**

This invention relates to bitumen compositions, their preparation, and their use in bitumen emulsions and surface dressings, e.g. for road surfacing.

Venezuelan crude oils naturally contain naphthenic acids. Bitumens prepared from such crude oils (naphthenic bitumens) contain the napththenic acids and have improved properties relative to bitumens (non-napthenic bitumens) prepared from crude oils which do not contain naphthenic acids, e.g. Middle East oils. It is known to add (and incorporate) naphthenic acids to non-naphthenic bitumens in order to try to attain the quality of naphthenic bitumens.

Australian Patent No. 557974 (Kao Corp.) discloses a liquid emulsifier composition suitable for preparing an asphalt (bitumen) emulsion which is dispersible in cold water and which comprises (1) at least one mono- or poly-amine containing a $C_{8-22}$ aliphatic group, and (2) at least one carboxylic acid that is (a) $C_{2-10}$ straight-chain saturated, (b) $C_{4-18}$ branched chain saturated, (c) $C_{12-18}$ straight-chain unsaturated, (d) $C_{5-18}$ saturated, containing a naphthenic ring, (e) $C_{7-18}$ aromatic, containing a benzene ring, or (f) a dimer acid, mainly a $C_{36}$ dicarboxylic acid.

It has now surprisingly been found that bitumen compositions having surprisingly enhanced properties can be obtained by incorporating polymerised fatty acids into bitumens.

According to the present invention therefore there is provided a bitumen composition comprising bitumen and at least one polymerised fatty acid contained (incorporated) in the bitumen, obtainable by a process which comprises incorporating the at least one polymerised fatty acid into the bitumen by mixing the acid or acids directly into molten bitumen.

Polymerised fatty acids, particularly dimer and trimer acids, typically contain alkyl chains greater than 4 carbon atoms, preferably at least 7 carbon atoms, and may be obtained by polymerisation of unsaturated fatty acids such as tall oil fatty acids and linoleic acid. Dimer acids (fatty acids, $C_{18}$-unsaturated dimers) are known and are assigned Chemistry Abstracts Registry Number CAS/61788-89-4. Trimer acids (fatty acids, $C_{18}$-unsaturated trimers) are also known (CAS/68937-90-6). Such polymerised fatty acids are described, for example, in Kirk-Othmer, Encyclopedia of Chemical Technology, Vol. 7, pages 768 to 782, 3rd Ed. (1979), John Wiley & Sons Inc., USA, and examples are commercially available, e.g. under the trade mark "PRIPOL" (Unichema International, U.K.) and the trade mark "POLYMERGIN" (Harburger Fettchemie Brinckman & Mergell G.m.b.H., W. Germany). They can also be prepared by plasma polymerisation, e.g. by the method described in EP-A-346 999.

Preferably, the at least one polymerised fatty acid comprises at least one acid selected from dimers and trimers of an unsaturated fatty acid, advantageously at least one acid selected from dimers and trimers of a $C_{18}$ unsaturated fatty acid. A particularly preferred polymerised fatty acid mixture comprises a blend containing 4 parts by weight $C_{36}$ dimer acid to 1 part by weight trimer acid, e.g. the dimer acid sold under the trade mark "PRIPOL 1017".

The proportions of the at least one polymerised fatty acid relative to the bitumen are not critical. However the at least one polymerised fatty acid is preferably present in an amount of at least 0.1% w/w of the bitumen, e.g. an amount in the range 0.1% to 2% w/w of the bitumen, more preferably at least 0.5% w/w of the bitumen, e.g. an amount in the range 0.5% to 1% w/w of the bitumen.

The invention also provides a process for preparing a bitumen composition of the invention which process comprises incorporating the at least one polymerised fatty acid into the bitumen, by mixing the acid component directly into molten bitumen. The bitumen may be any bitumen, but the advantages of the invention are most clearly attained when the bitumen is a non-naphthenic bitumen, as will readily be appreciated by those skilled in the art.

Emulsions and surface dressings, e.g. for road surfacing may readily be prepared from bitumen compositions of the invention, in known manner.

The invention thus further includes the use of bitumen compositions according to the invention in a bitumen emulsion or a surface dressing suitable for roads.

The invention will be further understood from the following illustrative examples, in which parts and percentages are by weight unless otherwise indicated.

EXAMPLES

Various doped bitumens were prepared based on five 180/220 penetration bitumens, viz. an industrially produced bitumen (Bitumen A) and laboratory bitumens prepared by blending well defined short residues from crude oils of different geographical origins with wash oils from the same crude oils, i.e. Aral Heavy (Bitumen B), Maya Isthmus (Bitumen C), Ural (Bitumen D), or by including a vacuum flashed thermally

2

cracked residue (Ural) (Bitumen E).

The bitumens were doped by adding doping agents to the molten bitumens whilst stirring until homogeneous.

Emulsions containing about 65% bitumen were prepared in conventional manner from the above bitumens, by introducing bitumen (at 140°C) into a turbine mill together with an aqueous phase containing hydrochloric acid and emulsifier ("DINORAM S"® cationic emulsifier ex CECA, France. (DNS)).

Various properties of the bitumens (adhesivity) and of the emulsions (e.g. viscosity, breaking behaviour) were measured, and the results are given in Tables 1 to 6 following, in which the doping agent RCO (also known as NOR 90) is a naphthenic acid used for purposes of comparison, "PRIPOL 1013"® and "PRIPOL 1017"® are dimer acids (Unichema International, UK), "PRIPOL 1049"® is a trimer acid (Unichema International, UK), "POLYMERGIN D75"® is a mixture of polymerised fatty acids with a high trimer acid content (Harburger Fettchemie Brinckman & Mergell GmbH), and "P4" is a mixture obtained by plasma polymerisation by the method of EP-A-346 999 containing approximately 20% of dimer and 40% of trimer acids. Various properties of these dimer and trimer acids are given in Table A immediately following:

3

EP 0 416 682 B1

TABLE A

| DIMER/TRIMER ACID | ACID VALUE (mg KOH/g) | VISCOSITY AT 25°C (Pa.s) | MONOMER ACID (%) | DIMER ACID (%) | TRIMER ACID (%) |
|---|---|---|---|---|---|
| "PRIPOL 1013" ® | 196 | 7.1 | Trace | 95 | 5 |
| "PRIPOL 1017" ® | 194 | 8.2 | 2 | 79 | 19 |
| "PRIPOL 1049" ® | 189 | 40.0 | Trace | 4 | 96 |
| "POLYMERGIN D75" ® | 185 | 8 | < 5 | 75 | 20 |
| P4 (plasma) | 182 | solid | 45 | 20 | 35 |

## TABLE 1

| BITUMEN 180/220 | A | A | A | A |
|---|---|---|---|---|
| DOPE | | | RCO | RCO |
| | 0 % | 0 % | 2 % | 2 % |
| Penetration 15°C | 53 | 53 | – | – |
| Penetration 25°C | 193 | 193 | 190 | – |
| Acid Number | 0 | 0 | 2 | – |
| Adhesivity | | | | |
| Quartzite | 25 | 25 | 25 | – |
| Flint | 0 | 0 | 0 | – |
| Limestone | 25 | 25 | 75 | – |
| Diorite | 75 | 75 | 90 | – |
| AQUEOUS PHASE | | | | |
| DNS kg/t | 1.5 | 1.5 | 1.5 | 1.5 |
| HCl kg/t | 1.0 | 1.0 | 1.0 | 1.0 |
| pH | 2.5 | 2.6 | 2.6 | 2.6 |
| EMULSION | | | | |
| Bitumen content % | 65.2 | 64.9 | 65.1 | 64.0 |
| pH | 3.1 | 3.2 | 3.0 | 3.2 |
| Pseudo-viscosity | | | | |
| Engler 20°C (degrees) | 12.2 | 9.7 | 14.0 | 10.9 |
| STV 25°C | – | – | – | – |
| expressed in cSt ($mm^2/s$) | 92 | 73 | 105 | 82 |
| Breaking Rate | | | | |
| LCPC | 100 | 110 | 100 | 95 |
| SMS 210m | – | 1.6 | 6.7 | – |

## TABLE 1 (continued)

| BITUMEN 180/220 | A | A | A | A |
|---|---|---|---|---|
| **Storage Stability** | | | | |
| decantation % | 1.2 | 1.6 | 1.1 | 1.1 |
| sediment % U | 65.5 | − | − | − |
| % L | 74.7 | − | − | − |
| % Δ | 9.2 | 5.9 | 6.3 | 13.3 |
| **Sieve Residue** | | | | |
| 630 μ m | <0.1 | <0.1 | <0.1 | <0.1 |
| 160 μ m | <0.1 | <0.1 | <0.1 | <0.1 |
| 63 μ m | 0.4 | 0.3 | 0.4 | − |
| 38 μ m | 2.2 | 1.8 | 1.2 | − |

TABLE 2

| BITUMEN 180/220 | A | A | A | A |
|---|---|---|---|---|
| DOPE | "PRIPOL 1013"Ⓡ 0.5% | "PRIPOL 1017"Ⓡ 0.5% | "PRIPOL 1049"Ⓡ 0.5% | "POLY-MERGIN D75"Ⓡ 0.5% |
| Penetration 15°C | - | - | - | - |
| Penetration 25°C | - | - | - | - |
| Acid Number | - | 1.2 | 1.2 | - |
| Adhesivity | | | | |
| Quartzite | - | 25 | 25 | - |
| Flint | - | 50 | 75 | - |
| Limestone | - | 90 | 100 | - |
| Diorite | - | 75 | 90 | - |
| AQUEOUS PHASE | | | | |
| DNS kg/t | 1.5 | 1.5 | 1.5 | 1.5 |
| HCl kg/t | 1.0 | 0.9 | 0.9 | 1.0 |
| pH | 2.5 | 2.8 | 2.8 | 2.6 |
| EMULSION | | | | |
| Bitumen content % | 63.7 | 64.7 | 64.0 | 65.1 |
| pH | 3.0 | 3.0 | 3.0 | 3.1 |
| Pseudo-viscosity Engler 20°C (degrees) | 10.2 | 12.9 | 11.0 | 13.8 |
| STV 25°C expressed in cSt ($mm^2/s$) | - 77 | - 97 | - 83 | - 104 |

## TABLE 2 (continued)

| BITUMEN 180/220 | A | A | A | A |
|---|---|---|---|---|
| DOPE | "PRIPOL 1013"® 0.5% | "PRIPOL 1017"® 0.5% | "PRIPOL 1049"® 0.5% | "POLY-MERGIN D75"® 0.5% |
| **Breaking Rate** | | | | |
| LCPC | 95 | 85 | 70 | 75 |
| SMS 210m | 9.3 | 10.8 | 7.3 | 5.2 |
| **Storage Stability** | | | | |
| decantation % | 1.0 | 1.1 | 1.1 | 0.6 |
| sediment % U | 63.3 | 64.4 | 64.2 | 64.7 |
| % L | 70.3 | 68.5 | 69.6 | 69.6 |
| % Δ | 7.0 | 4.1 | 5.4 | 4.9 |
| **Sieve Residue** | | | | |
| 630 $\mu$ m | <0.1 | <0.1 | <0.1 | <0.1 |
| 160 $\mu$ m | <0.1 | <0.1 | <0.1 | <0.1 |
| 63 $\mu$ m | <0.1 | 0.2 | 0.1 | <0.1 |
| 38 $\mu$ m | 0.4 | 0.6 | 0.4 | 0.31 |

TABLE 3

| BITUMEN | A | A | A | A |
|---|---|---|---|---|
| DOPE | P4 | P4 | "PRIPOL 1013"® | "PRIPOL 1049"® |
| | 0.5% | 1.0% | 1.0% | 1.0% |
| Penetration 15°C | – | – | 55 | 53 |
| Penetration 25°C | – | – | 214 | 203 |
| Acid Number | – | 1.9 | 2.1 | 2.2 |
| Adhesivity | | | | |
| Quartzite | 25 | 50 | 25 | 25 |
| Flint | 75 | 90 | 90 | 90 |
| Limestone | 90 | 90 | 90 | 90 |
| Diorite | 90 | 90 | 75 | 75 |
| AQUEOUS PHASE | | | | |
| DNS kg/t | 1.5 | 1.5 | 1.5 | 1.5 |
| HCl kg/t | 1.0 | 1.0 | 1.0 | 1.0 |
| pH | 2.6 | 2.6 | 2.6 | 2.6 |
| EMULSION | | | | |
| Bitumen content % | 65.4 | 65.0 | 65.0 | 65.0 |
| pH | 2.9 | 2.8 | 2.7 | 2.6 |
| Pseudo-viscosity | | | | |
| Engler 20°C (degrees) | 13.4 | 18.6 | 34.7 | 20.2 |
| STV 25°C | – | 16.1 | 43 | 19 |
| expressed in cSt $(mm^2/s)$ | 101 | 213 | 568 | 251 |

## TABLE 3 (continued)

| BITUMEN | A | A | A | A |
|---|---|---|---|---|
| DOPE | P4 | P4 | "PRIPOL 1013"® | "PRIPOL 1049"® |
|  | 0.5% | 1.0% | 1.0% | 1.0% |
| **Breaking Rate** | | | | |
| LCPC | 80 | 55 | 70 | 45 |
| SMS 210m | 5.1 | 29 | 27.5 | 42.7 |
| **Storage Stability** | | | | |
| decantation % | 0.0 | 0.0 | 1.0 | 1.0 |
| sediment % U | 59.6 | 65.6 | 64.7 | 65.1 |
| % L | 70.5 | 67.7 | 66.8 | 67.6 |
| % Δ | 10.9 | 2.1 | 2.1 | 2.5 |
| **Sieve Residue** | | | | |
| 630 $\mu$ m | <0.1 | <0.1 | <0.1 | <0.1 |
| 160 $\mu$ m | <0.1 | <0.1 | <0.1 | <0.1 |
| 63 $\mu$ m | 0.3 | <0.1 | <0.1 | <0.1 |
| 38 $\mu$ m | 1.2 | 0.4 | 0.2 | <0.1 |

## TABLE 4

| BITUMEN 180/220 | B | B | C | C |
|---|---|---|---|---|
| DOPE | | "PRIPOL 1017"® 0.5% | | "PRIPOL 1017"® 0.5% |
| Penetration 15°C | 63 | – | 62 | – |
| Penetration 25°C | 215 | – | 205 | – |
| Acid Number | 0 | – | 0 | – |
| Adhesivity | | | | |
| Quartzite | 0 | 50 | 25 | 75 |
| Flint | 25 | 75 | 75 | 90 |
| Limestone | 50 | 100 | 50 | 100 |
| Diorite | 50 | 75 | 75 | 90 |
| AQUEOUS PHASE | | | | |
| DNS kg/t | 1.5 | 1.5 | 1.5 | 1.5 |
| HCl kg/t | 1.0 | 1.0 | 1.0 | 1.0 |
| pH | 2.5 | 2.5 | 2.5 | 2.5 |
| EMULSION | | | | |
| Bitumen content % | 64.5 | 64.7 | 64.6 | 64.7 |
| pH | 3.1 | 2.8 | 3.6 | 3.1 |
| Pseudo-viscosity | | | | |
| Engler 20°C (degrees) | – | 10.9 | 14.1 | 20.1 |
| STV 25°C | 24 | – | – | – |
| expressed in cSt $(mm^2/_s)$ | 317 | 82 | 106 | 151 |

## TABLE 4 (continued)

| BITUMEN 180/220 | B | B | C | C |
|---|---|---|---|---|
| DOPE | | "PRIPOL® 1017" 0.5% | | "PRIPOL® 1017" 0.5% |
| **Breaking Rate** | | | | |
| LCPC | 105 | 80 | 100 | 75 |
| SMS 210m | 1.4 | 7.0 | 1.6 | 4.0 |
| **Storage Stability** | | | | |
| decantation % | 0.9 | 1.4 | 1.1 | 0.8 |
| sediment % U | – | 63.8 | – | 64.2 |
| % L | – | 70.5 | – | 68.7 |
| % Δ | 7.7 | 6.7 | 9.1 | 4.5 |
| **Sieve Residue** | | | | |
| 630 $\mu$ m | <0.1 | <0.1 | <0.1 | <0.1 |
| 160 $\mu$ m | <0.1 | <0.1 | <0.1 | <0.1 |
| 63 $\mu$ m | 0.4 | 0.1 | 0.3 | 0.1 |
| 38 $\mu$ m | 1.7 | 0.4 | 1.5 | 0.5 |

## TABLE 5

| BITUMEN 180/220 | D | D | D |
|---|---|---|---|
| DOPE | | RCO 2.0% | "PRIPOL 1017"® 0.5% |
| Penetration 15°C | 62 | – | – |
| Penetration 25°C | 213 | – | – |
| Acid Number | 0 | – | – |
| **Adhesivity** | | | |
| Quartzite | 25 | 25 | 75 |
| Flint | 50 | 25 | 75 |
| Limestone | 25 | 25 | 100 |
| Diorite | 50 | 50 | 75 |
| **AQUEOUS PHASE** | | | |
| DNS kg/t | 1.5 | 1.5 | 1.5 |
| HCl kg/t | 1.0 | 1.0 | 1.0 |
| pH | 2.5 | 2.5 | 2.5 |
| **EMULSION** | | | |
| Bitumen content % | 64.5 | 64.1 | 64.4 |
| pH | 3.5 | 3.2 | 3.1 |
| **Pseudo-viscosity** | | | |
| Engler 20°C (degrees) | 14.0 | 18.1 | 11.4 |
| STV 25°C | – | – | – |
| expressed in cSt ($mm^2/s$) | 105 | 136 | 86 |

## TABLE 5

| BITUMEN 180/220 | D | D | D |
|---|---|---|---|
| DOPE | | RCO 2.0% | "PRIPOL 1017"® 0.5% |
| **Breaking Rate** | | | |
| LCPC | 105 | 90 | 80 |
| SMS 210m | 1.8 | 4.6 | 8.2 |
| **Storage Stability** | | | |
| decantation % | 1.2 | 0.6 | 0.0 |
| sediment % U | − | − | 64.9 |
| % L | − | − | 68.3 |
| % Δ | 7.9 | 6.3 | 3.4 |
| **Sieve Residue** | | | |
| 630 μ m | <0.1 | <0.1 | <0.1 |
| 160μ m | <0.1 | <0.1 | <0.1 |
| 63 μ m | 0.2 | 0.1 | <0.1 |
| 38 μ m | 1.4 | 1.3 | <0.1 |

## TABLE 6

| BITUMEN 180/220 | E | E | E |
|---|---|---|---|
| DOPE | | RCO | "PRIPOL 1017"® |
| | | 2.0% | 0.5% |
| | | | |
| Penetration 15°C | 64 | – | – |
| Penetration 25°C | 223 | – | – |
| Acid Number | 0 | – | – |
| | | | |
| Adhesivity | | | |
| Quartzite | 50 | 75 | 75 |
| Flint | 75 | 75 | 100 |
| Limestone | 50 | 50 | 100 |
| Diorite | 75 | 75 | 90 |
| | | | |
| AQUEOUS PHASE | | | |
| DNS kg/t | 1.5 | 1.5 | 1.5 |
| HCl kg/t | 1.0 | 1.0 | 1.0 |
| pH | 2.5 | 2.5 | 2.5 |
| | | | |
| EMULSION | | | |
| Bitumen content % | 64.7 | 64.3 | 65.0 |
| | | | |
| pH | 3.3 | 3.3 | 3.0 |
| | | | |
| Pseudo-viscosity | | | |
| Engler 20°C (degrees) | 13.2 | 14.1 | 9.7 |
| STV 25°C | – | – | – |
| expressed in cSt ($mm^2/s$) | 99 | 106 | 73 |

## TABLE 6 (continued)

| BITUMEN 180/220 | E | E | E |
|---|---|---|---|
| DOPE | | RCO | "PRIPOL 1017"® |
| | | 2.0% | 0.5% |
| **Breaking Rate** | | | |
| LCPC | 100 | 80 | 80 |
| SMS 210m | 1.7 | 8.1 | 17.2 |
| **Storage Stability** | | | |
| decantation % | 1.6 | 1.1 | 0.8 |
| sediment % U | – | – | 63.0 |
| % L | – | – | 70.9 |
| % Δ | 9.9 | 8.2 | 7.9 |
| **Sieve Residue** | | | |
| 630 μ m | <0.1 | <0.1 | <0.1 |
| 160μ m | <0.1 | <0.1 | <0.1 |
| 63 μ m | 0.2 | 0.2 | 0.1 |
| 38 μ m | 1.4 | 1.0 | 0.1 |

The results of tests on the various emulsions given in Tables 1 to 6 above are illustrated in figures in the accompanying drawings, Figures 2 to 5 being concerned with the effect of doping on break performance. In the figures constituting the accompanying drawings:

Figure 1 shows the effect of doping (% dimer and trimer acids on the X axis) on the pseudoviscosity of the emulsion (expressed in cSt ($mm^2/_s$)) for various acid mixtures;

Figure 2 records the SMS 210m test (%) on the X axis and the LCPC test (g/100g) on the Y axis for emulsions prepared from a bitumen A which is undoped or doped with different agents;

Figure 3 is similar to Figure 2, but relates to different Bitumens, either undoped or doped with the same agent ("PRIPOL 1017"®);

Figure 4 shows % of dimer and trimer acids on the X axis and percentage deposited on the Y axis, as recorded in the SMS 210m test;

Figure 5 shows percentages of dimer and trimer acids on the X axis and filler (g/100g) on the Y axis, as recorded in the LCPC test; and

Figure 6 shows the effect of "PRIPOL 1017"® on the mean adhesivity, pseudoviscosity and sedimentation of an emulsion, compared with an undoped bitumen.

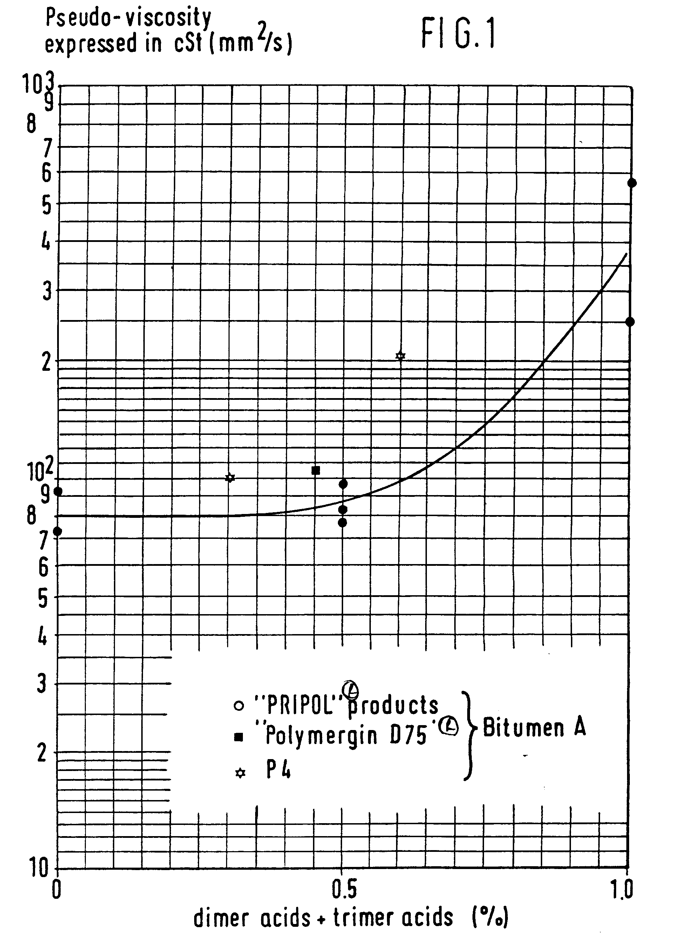

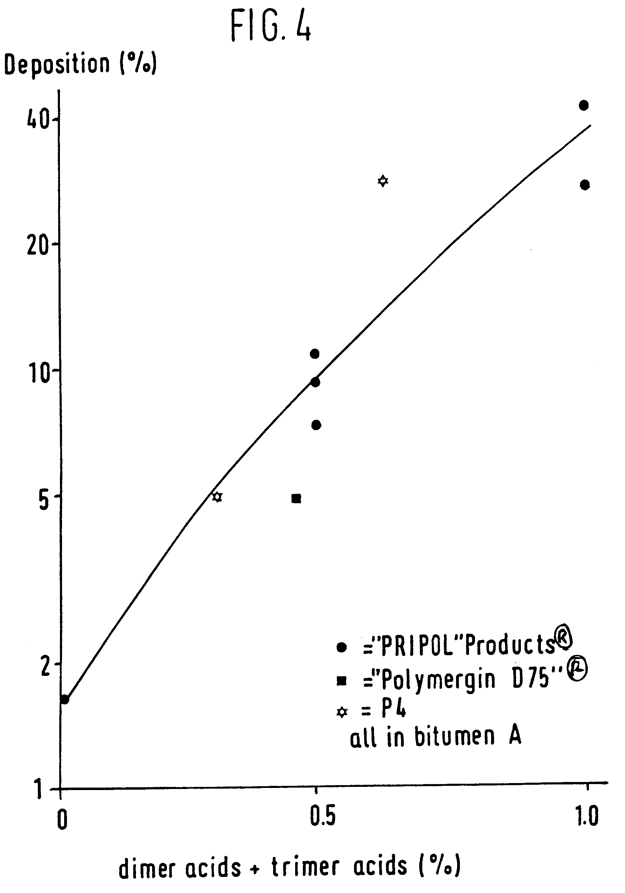

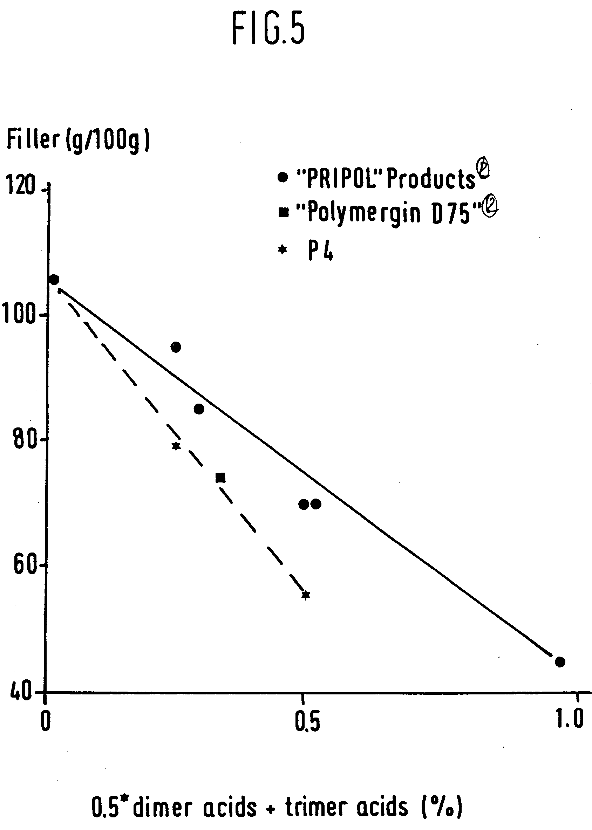

In the above Tables 1 to 6 and Figures 1 to 6, pseudoviscosity was measured in known manner using an Engler viscometer and using a standard tar viscometer (STV). The abbreviations under "Storage Stability" refer to upper layer ("U"), lower layer ("L") and the difference therebetween (Greek letter delta).

Adhesivity of the bitumen and breaking rates of the emulsions were tested as follows:

1. ADHESIVITY (LCPC method)

The purpose of this test is to assess the adhesivity, in the presence of water, of a hydrocarbon binder coated on aggregate, and in it the displacement of bitumen by water on the surface of the aggregate is measured. In the test, bitumen-coated aggregate is plunged into water while hot, and the percentage of the surface covered by the binder after 16 hours' immersion at 60°C is evaluated. The test is carried out with four types of reference aggregate, as indicated.

2. LCPC break index

Reference fines (siliceous fines in the case of cationic emulsions) are poured continuously through a funnel at a rate of 0.3 to 0.5 g/s into a beaker containing 100g of emulsion. The mixture is agitated constantly, and the addition of fines halted when the aggregate-emulsion system takes on the appearance of a block. The quantity of fines added to the 100g of bitumen emulsion is called the break index.

3. SMS 210m break index

10g of aggregate (Corbigny porphyry, 2 to 4mm) are placed in contact with an excess of emulsion (about 10g) for 1 hour in an environment saturated with water in order to prevent any evaporation. The unbroken emulsion is removed with distilled water. After drying, the quantity of bitumen deposited is determined by weighing, and the result expressed in relation to 10g of emulsion.

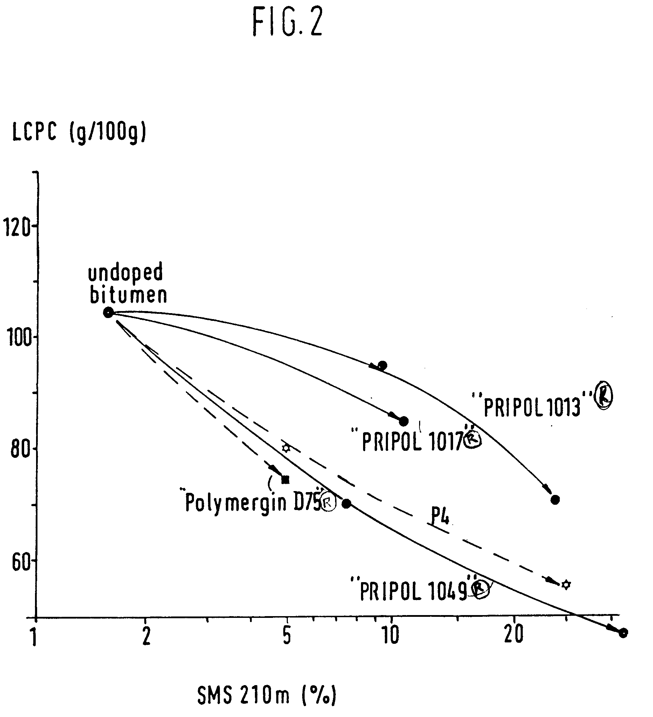

From the Tables and the Figures (particularly Figure 2) it is evident that all the dimer/trimer acids significantly improved the breaking performance of the emulsions.

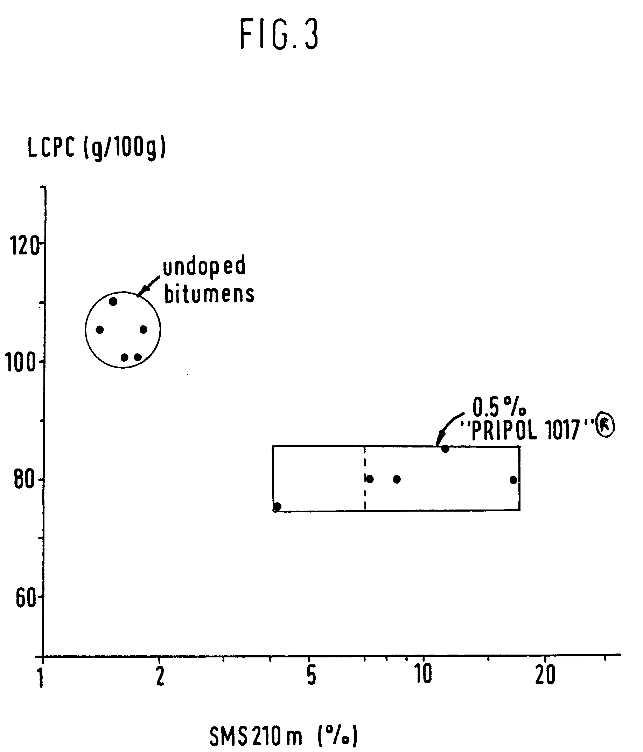

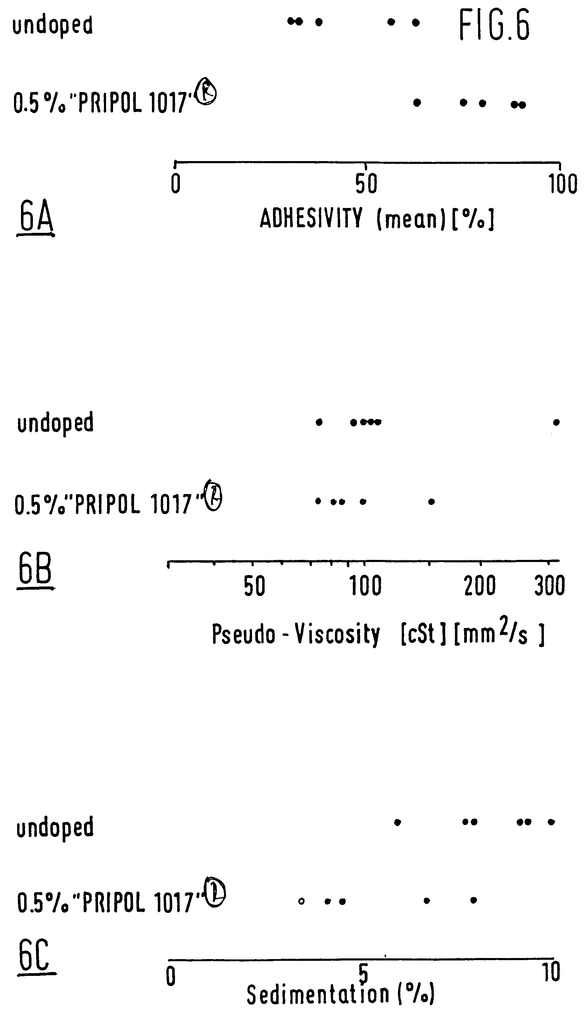

Overall, the dimer acid "PRIPOL 1017"® is the most preferred dimer/trimer acid for its combination of improvements in relation to adhesivity of the bitumens and sedimentation performance (Figure 6) and breaking behaviour (Figure 3) of the emulsions.

**Claims**
**Claims for the following Contracting States : AT, CH, DE, DK, FR, GB, IT, LI, NL, SE**

1. A bitumen composition comprising bitumen and at least one polymerised fatty acid contained in the bitumen, obtainable by a process which comprises incorporating the at least one polymerised fatty acid into the bitumen by mixing the acid or acids directly into molten bitumen.

2. A composition according to Claim 1 wherein the at least one polymerised fatty acid comprises at least one acid selected from dimers and trimers of an unsaturated fatty acid.

3. A composition according to Claim 1 or 2 wherein the at least one polymerised fatty acid comprises at least one acid selected from dimers and trimers of a $C_{18}$ unsaturated fatty acid.

4. A composition according to any one of Claims 1 to 3 wherein the at least one polymerised fatty acid is present in an amount of at least 0.1% w/w of the bitumen.

5. A composition according to Claim 4 wherein the amount is in the range 0.1% to 2% w/w of the bitumen.

6. A composition according to Claim 4 or 5 wherein the amount is at least 0.5% w/w of the bitumen.

7. A composition according to Claim 6 wherein the amount is in the range 0.5% to 1% w/w of the bitumen.

8. A process for preparing a bitumen composition according to any one of Claims 1 to 7 which comprises incorporating the at least one polymerised fatty acid into the bitumen by mixing the acid or acids directly into molten bitumen.

9. Use of a composition according to any one of Claims 1 to 7 in a bitumen emulsion or a surface dressing suitable for roads.

**Claims for the following Contracting State : ES**

1. A process for preparing a bitumen composition comprising bitumen and at least one polymerised fatty acid contained in the bitumen, which comprises incorporating the at least one polymerised fatty acid into the bitumen by mixing the acid or acids directly into molten bitumen.

2. A process according to Claim 1 wherein the at least one polymerised fatty acid comprises at least one acid selected from dimers and trimers of an unsaturated fatty acid.

3. A process according to Claim 1 or 2 wherein the at least one polymerised fatty acid comprises at least one acid selected from dimers and trimers of a $C_{18}$ unsaturated fatty acid.

4. A process according to any one of Claims 1 to 3 wherein the at least one polymerised fatty acid is present in an amount of at least 0.1% w/w of the bitumen.

5. A process according to Claim 4 wherein the amount is in the range 0.1% to 2% w/w of the bitumen.

6. A process according to Claim 4 or 5 wherein the amount is at least 0.5% w/w of the bitumen.

7. A process according to Claim 6 wherein the amount is in the range 0.5% to 1% w/w of the bitumen.

8. Use in a bitumen emulsion or a surface dressing suitable for roads of a bitumen composition comprising bitumen and at least one polymerised fatty acid contained in the bitumen, obtainable by a process which comprises incorporating the at least one polymerised fatty acid into the bitumen by mixing the acid or acids directly into molten bitumen.

**Patentansprüche**
**Patentansprüche für folgende Vertragsstaaten : AT, CH, DE, DK, FR, GB, IT, LI, NL, SE**

1. Bitumenzusammensetzung, umfassend Bitumen und wenigstens eine, im Bitumen enthaltene polymerisierte Fettsäure, erhältlich nach einem Verfahren, das ein Einverleiben der wenigstens einen polymerisierten Fettsäure in das Bitumen durch direktes Einmischen der Säure oder der Säuren in geschmolzenes Bitumen umfaßt.

2. Zusammensetzung nach Anspruch 1, worin die wenigstens eine polymerisierte Fettsäure wenigstens eine unter Dimeren und Trimeren einer ungesättigten Fettsäure ausgewählte Säure umfaßt.

3. Zusammensetzung nach Anspruch 1 oder 2, worin die wenigstens eine polymerisierte Fettsäure wenigstens eine unter Dimeren und Trimeren einer $C_{18}$-ungesättigten Fettsäure ausgewählte Säure umfaßt.

4. Zusammensetzung nach einem der Ansprüche 1 bis 3, worin die wenigstens eine polymerisierte Fettsäure in einer Menge von wenigstens 0,1% Gew./Gew. des Bitumens vorliegt.

5. Zusammensetzung nach Anspruch 4, worin die Menge im Bereich von 0,1 bis 2% Gew./Gew. des Bitumens beträgt.

6. Zusammensetzung nach Anspruch 4 oder 5, worin die Menge wenigstens 0,5% Gew./Gew. des Bitumens beträgt.

7. Zusammensetzung nach Anspruch 6, worin die Menge im Bereich von 0,5 bis 1% Gew./Gew. des Bitumens beträgt.

8. Verfahren zur Herstellung einer Bitumenzusammensetzung nach einem der Ansprüche 1 bis 7, welches ein Einverleiben der wenigstens einen polymerisierten Fettsäure in das Bitumen durch direktes Einmischen der Säure oder der Säuren in geschmolzenes Bitumen umfaßt.

9. Verwendung einer Zusammensetzung nach einem der Ansprüche 1 bis 7 in einer Bitumenemulsion oder in einem für Straßen geeigneten Oberflächenbelag.

**Patentansprüche für folgenden Vertragsstaat : ES**

1. Verfahren zur Herstellung einer Bitumenzusammensetzung, umfassend Bitumen und wenigstens eine in dem Bitumen enthaltene polymerisierte Fettsäure, welches ein Einverleiben der wenigstens einen polymerisierten Fettsäure in das Bitumen durch direktes Einmischen der Säure oder der Säuren in geschmolzenes Bitumen umfaßt.

2. Verfahren nach Anspruch 1, worin die wenigstens eine polymerisierte Fettsäure wenigstens eine unter Dimeren und Trimeren einer ungesättigten Fettsäure ausgewählte Säure umfaßt.

3. Verfahren nach Anspruch 1 oder 2, worin die wenigstens eine polymerisierte Fettsäure wenigstens eine unter Dimeren und Trimeren einer $C_{18}$-ungesättigten Fettsäure ausgewählte Säure umfaßt.

4. Verfahren nach einem der Ansprüche 1 bis 3, worin die wenigstens eine polymerisierte Fettsäure in einer Menge von wenigstens 0,1% Gew./Gew. des Bitumens vorliegt.

5. Verfahren nach Anspruch 4, worin die Menge im Bereich von 0,1 bis 2% Gew./Gew. des Bitumens beträgt.

6. Verfahren nach Anspruch 4 oder 5, worin die Menge wenigstens 0,5% Gew./Gew. des Bitumens beträgt.

7. Verfahren nach Anspruch 6, worin die Menge im Bereich von 0,5 bis 1% Gew./Gew. des Bitumens beträgt.

8. Verwendung einer Bitumenzusammensetzung, umfassend Bitumen und wenigstens eine, in dem Bitumen enthaltene polymerisierte Fettsäure, welche Zusammensetzung nach einem Verfahren erhältlich ist, das ein Einverleiben der wenigstens einen polymerisierten Fettsäure in das Bitumen durch direktes Einmischen der Säure oder der Säuren in geschmolzenes Bitumen umfaßt, in einer Bitumenemulsion oder einem für Straßen geeigneten Oberflächenbelag.

**Revendications**
**Revendications pour les Etats contractants suivants : AT, CH, DE, DK, FR, GB, IT, LI, NL, SE**

1. Composition de bitume comprenant du bitume et au moins un acide gras polymérisé contenu dans le bitume, pouvant être obtenue par un procédé comprenant l'incorporation d'au moins un acide gras polymérisé dans le bitume par mélange de l'acide ou des acides directement dans du bitume fondu.

2. Composition selon la revendication 1, dans laquelle le dit au moins un acide gras polymérisé comprend au moins un acide choisi parmi les dimères et les trimères d'un acide gras insaturé.

3. Composition selon l'une des revendications 1 ou 2, dans laquelle le dit au moins un acide gras polymérisé comprend au moins un acide choisi parmi les dimères et trimères d'un acide gras insaturé en $C_{18}$.

4. Composition selon l'une quelconque des revendications 1 à 3, dans laquelle le dit au moins un acide gras polymérisé est présent en une quantité d'au moins 0,1% en poids/poids du bitume.

5. Composition selon la revendication 4, dans laquelle la quantité est comprise dans l'intervalle de 0,1% à 2% en poids/poids du bitume.

6. Composition selon l'une des revendications 4 ou 5, dans laquelle la quantité est d'au moins 0,5% en poids/poids du bitume.

**7.** Composition selon la revendication 6, dans laquelle la quantité est dans l' intervalle de 0,5% à 1% en poids/poids du bitume.

**8.** Procédé pour la préparation d'une composition bitumineuse selon l'une quelconque des revendications 1 à 7, comprenant l'incorporation du dit au moins un acide gras polymérisé dans le bitume par mélange de l'acide ou des acides directement dans du bitume fondu.

**9.** Utilisation d'une composition selon l'une quelconque des revendications 1 à 7, dans une émulsion bitumineuse ou un enduit de surface approprié pour les routes.

**Revendications pour l'Etat contractant suivant : ES**

**1.** Procédé pour la préparation d'une composition de bitume comprenant un bitume et au moins un acide gras polymérisé contenu dans le bitume, comprenant l'incorporation d'au moins un acide gras polymérisé dans le bitume par mélange de l'acide ou des acides directement dans du bitume fondu.

**2.** Procédé selon la revendication 1, dans lequel le dit au moins un acide gras polymérisé comprend au moins un acide choisi parmi les dimères et les trimères d'un acide gras insaturé.

**3.** Procédé selon l'une des revendications 1 ou 2, dans lequel le dit au moins un acide gras polymérisé comprend au moins un acide choisi parmi les dimères et trimères d'un acide gras insaturé en $C_{18}$.

**4.** Procédé selon l'une quelconque des revendications 1 à 3, dans lequel le dit au moins un acide gras polymérisé est présent en une quantité d'au moins 0,1% en poids/poids du bitume.

**5.** Procédé selon la revendication 4, dans lequel la quantité est comprise dans l'intervalle de 0,1% à 2% en poids/poids du bitume.

**6.** Procédé selon l'une des revendications 4 ou 5, dans lequel la quantité est d'au moins 0,5% en poids/poids du bitume.

**7.** Procédé selon la revendication 6, dans lequel la quantité est dans l'intervalle de 0,5% à 1% en poids/poids du bitume.

**8.** Utilisation dans une émulsion bitumineuse ou un enduit de surface approprié pour les routes d'une composition bitumineuse comprenant du bitume et au moins un acide gras polymérisé contenu dans le bitume, pouvant être obtenue par un procédé comprenant l'incorporation du dit au moins un acide gras polymérisé dans le bitume bar mélange de l'acide ou des acides directement dans du bitume fondu.

Pseudo-viscosity
expressed in cSt (mm$^2$/s)

FIG.1

dimer acids + trimer acids (%)

o "PRIPOL" products
■ "Polymergin D75" (R) } Bitumen A
☆ P4

# FIG. 2

LCPC (g/100g)

SMS 210m (%)

# FIG.3

FIG. 4

# FIG.5

undoped

0.5 % "PRIPOL 1017" Ⓚ

0          50          100

ADHESIVITY (mean) [%]

6A

FIG.6

undoped

0.5 % "PRIPOL 1017" Ⓛ

50    100    200  300

Pseudo - Viscosity [cSt] [mm$^2$/s]

6B

undoped

0.5 % "PRIPOL 1017" Ⓛ

0        5        10

Sedimentation (%)

6C